# FASCICULE DE BREVET EUROPEEN

(11) **EP 3 676 486 B1**
(45) Date de publication et mention de la délivrance du brevet: **16.06.2021**
(21) Numéro de dépôt: 18773536.0
(22) Date de dépôt: 30.08.2018
(51) Int. Cl.: F02K 1/72, F02K 1/76

(54) **NACELLE POUR TURBOREACTEUR COMPORTANT UN INVERSEUR DE POUSSEE A GRILLES**
VERKLEIDUNG EINES GASTURBINENMOTORS MIT KASKADENSCHUBUMKEHRVORRICHTUNG
GAS TURBINE ENGINE NACELLE COMPRISING A CASCADE TYPE THRUST REVERSER

(30) Priorité: 31.08.2017 FR 1758044
(43) Date de publication de la demande: 08.07.2020
(73) Titulaire: Safran Nacelles, 76700 Gonfreville-l'Orcher (FR)
(72) Inventeur: LE BOULICAUT, Loïc, Hervé, André, 76700 Gonfreville L'Orcher (FR)
(74) Mandataire: Delorme, Nicolas
(86) Numéro de dépôt international: PCT/FR2018/052133
(87) Numéro de publication internationale: WO 2019/043343

(56) Documents cités:
- EP-A1- 3 193 002
- DE-A1-102013 206 595
- FR-A1- 2 966 883
- US-A1- 2013 205 753

## Description

La présente invention concerne une nacelle de turboréacteur équipée d'un inverseur de poussée à grilles.

Les turboréacteurs de motorisation des aéronefs disposés suivant un axe longitudinal, insérés dans une nacelle, reçoivent de l'air frais venant du côté avant, et rejettent du côté arrière les gaz chauds issus de la combustion du carburant délivrant une poussée.

Pour les turboréacteurs à double flux, des aubes de soufflante disposées autour du moteur génèrent un flux secondaire important d'air froid le long d'une veine annulaire passant entre ce moteur et la nacelle, qui ajoute une poussée élevée.

Certaines nacelles comportent un système d'inversion de poussée qui ferme au moins en partie la veine annulaire d'air froid, et rejette le flux secondaire radialement vers l'extérieur en le dirigeant vers l'avant afin de générer une poussée inversée de freinage de l'aéronef.

Un type d'inverseur de poussée à grilles connu, présenté notamment par le document US-A1-20160160799, comporte des capots mobiles arrière coulissant axialement vers l'arrière sous l'effet de vérins, pour ouvrir des passages d'airs latéraux sur la nacelle contenant des grilles. Un autre inverseur de poussée à grilles selon l'art antérieur est connu du document EP 3 193 002 A1.

Les capots arrière sont reliés par des biellettes de commande montées sur des articulations, décrivant des courbes dans un plan axial, aux grilles d'inversion de poussée entraînées vers l'arrière, et à des volets de fermeture du flux principal.

Les biellettes sont disposées pour obtenir une translation des grilles vers l'arrière moins importante que celle des capots, et un basculement des volets dans la veine annulaire d'air froid qui ferme au moins en partie cette veine en dirigeant le flux radialement vers l'extérieur au travers des grilles renvoyant ce flux vers l'avant.

Toutefois ce type d'inverseur de poussée comportant des biellettes disposées en dessous des grilles, décrivant des courbes dans un plan axial, occupe un volume relativement important en dessous de ces grilles qui ne permet pas d'optimiser les formes aérodynamiques de la veine annulaire, ainsi que son garnissage de panneaux insonorisant.

La présente invention a notamment pour but d'éviter ces inconvénients de la technique antérieure.

Elle propose à cet effet une nacelle de turboréacteur selon la revendication 1. La nacelle comprend un inverseur de poussée comportant des grilles d'inversion de poussée disposées autour d'une veine annulaire comprenant radialement à l'extérieur un carter avant fixe, comportant au moins un capot mobile reculant vers l'arrière dans une position ouverte d'inversion de poussée, et comportant des volets basculants reliés par des pivots arrière aux capot mobile, qui basculent en fermant au moins en partie la veine annulaire dans la position ouverte, cet inverseur étant remarquable en ce que les grilles reculent avec les capots mobiles, en ce que dans la position fermée les volets basculants et les grilles sont disposés à l'extérieur du carter fixe, et en ce que chaque volet basculant est relié au carter fixe par des glissières qui le font basculer lors du recul du capot mobile.

Un avantage de cet inverseur est que dans la position fermée les grilles et les volets basculants étant rangés au-dessus du carter fixe, la longueur axiale de la nacelle peut être très courte. De plus la glissière peut être rangée au-dessus du capot fixe ce qui libère complètement le passage de la veine annulaire en limitant les pertes aérodynamiques.

L'inverseur de poussée selon l'invention peut comporter de plus une ou plusieurs des caractéristiques suivantes, qui peuvent être combinées entre elles.

Avantageusement, dans la position fermée, les volets basculants et les grilles sont disposés successivement dans cet ordre à l'extérieur du carter fixe.

L'inverseur comporte un support de glissières lié du côté avant par un pivot aux grilles, supportant les glissières qui sont fixées dessus, commandant l'ouverture d'un volet.

Dans ce cas, avantageusement l'inverseur comporte une première glissière recevant dans une rainure un axe transversal lié au carter avant, qui commande un basculement du support de glissières.

De plus, avantageusement l'inverseur comporte une deuxième glissière recevant dans une rainure un doigt transversal lié aux volets, qui commande un basculement de ce volet. Les deux rainures forment des cames permettant d'ajuster facilement la cinématique du mouvement du volet.

Avantageusement, le support de glissière comporte du côté arrière un tronçon de veine annulaire, qui est dans la position fermée axialement interposé entre le carter avant et une surface intérieure de la veine annulaire du capot mobile.

Avantageusement, le support de glissières comporte dans la position ouverte un passage intérieur du flux présentant des bords de déviation de ce flux. On améliore de cette manière la déviation du flux radialement vers l'extérieur.

Avantageusement, ledit support de glissières comporte des aubes permettant de diriger le flux d'air de ladite veine annulaire vers lesdites grilles.

Avantageusement, chaque volet comporte deux demi-volets coulissant l'un par rapport à l'autre. Dans la position fermée le volet est ainsi beaucoup plus compact.

Avantageusement, l'inverseur comporte au moins une tige télescopique comprenant une partie intérieure et une partie extérieure fixées chacune à un demi-volet pour le guider.

Avantageusement, l'inverseur comporte de chaque côté d'un volet, au moins une bielle comprenant une extrémité pivotante fixée aux grilles et l'autre extrémité pivotante fixée au volet, pour guider ce volet.

L'invention sera mieux comprise et d'autres caractéristiques et avantages apparaîtront plus clairement à la lecture de la description ci-après donnée à titre d'exemple, en référence aux dessins annexés dans lesquels :
- les figures 1, 2a, 2b et 3 présentent un inverseur de poussée selon l'invention qui est fermé, présenté respectivement en coupe axiale suivant un plan de coupe passant sur le côté d'une grille, un plan de coupe passant par une glissière courbe, un plan de coupe passant par une glissière droite, et présenté en perspective ;
- les figures 4, 5a, 5b et 6 présentent suivant les mêmes vues cet inverseur de poussée qui est entièrement ouvert ;
- les figures 7 et 8 présentent respectivement suivant les deux premiers plans de coupe, cet inverseur de poussée ouvert à 50 % ;
- les figures 9 et 10 présentent respectivement suivant les deux premiers plans de coupe, cet inverseur de poussée ouvert à 75 % ;
- les figures 11 et 12 présentent respectivement suivant les deux premiers plans de coupe, cet inverseur de poussée ouvert à 90 % ; et
- la figure 13 présente une variante de cet inverseur de poussée.

Pour plus de clarté, les éléments identiques ou similaires sont repérés par des signes de référence identiques sur l'ensemble des figures.

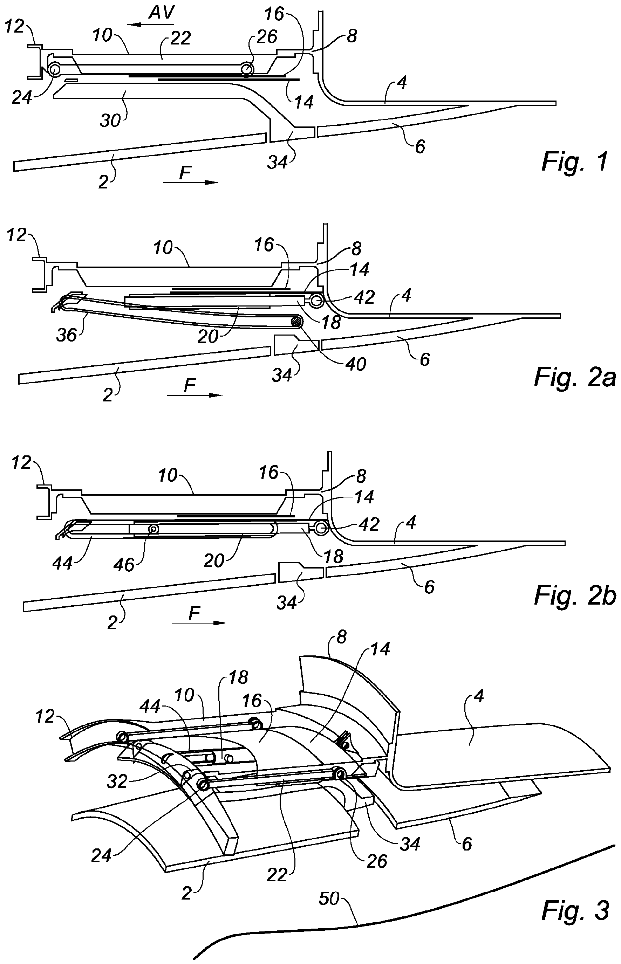

Les figures 1, 2a, 2b et 3 présentent un inverseur de poussée d'une nacelle disposant d'un axe principal présentant un côté avant indiqué par la flèche AV, correspondant au sens de la marche.

La nacelle comporte une veine annulaire d'air froid recevant un flux F, délimitée radialement vers l'extérieur par un carter avant fixe 2, qui se prolonge vers l'arrière par la face intérieure 6 d'un capot arrière mobile 4.

Le capot arrière mobile 4 comporte du côté avant, un cadre arrière circulaire 8 et un cadre avant circulaire 12, recevant des grilles d'inversion de flux 10 couvrant l'espace annulaire formé entre ces deux cadres.

Dans la position fermée l'extrémité arrière des grilles 10 est sensiblement alignée sur l'extrémité arrière du carter avant fixe 2, les grilles s'étendent en grande partie au-dessus de ce carter avant.

Des volets mobiles comprenant chacun un demi-volet avant 16 et un demi-volet arrière 14, superposés l'un sur l'autre, sont disposés à plat juste en dessous de chaque grille 10.

Une tige télescopique 18 disposée au milieu de chaque volet, comporte une partie intérieure comprenant du côté arrière un pivot 42 lié au capot mobile 4 (et plus précisément au cadre arrière 8 dans l'exemple), qui est fixée au demi-volet arrière 14, et une partie extérieure 20 coulissant autour de la partie intérieure, qui est fixée au demi-volet avant 16. De cette manière une extension de la tige télescopique 18 réalise un coulissement des deux demi-volets 14, 16 l'un sur l'autre.

De chaque côté des grilles 10, une bielle 22 comporte un pivot avant 24 fixé au cadre avant 12, et un pivot arrière 26 fixé sur le côté du demi-volet avant 16.

Un support de glissières 30 formant un plateau disposé en dessous de chaque grille 10, comporte à son extrémité avant un pivot 32 fixé au cadre avant 12, et à l'arrière un tronçon de veine annulaire 34, présentant une petite longueur axiale qui est ajustée entre le carter avant 2 et la face intérieure 6 du capot arrière 4 afin d'assurer une continuité de surface aérodynamique entre eux.

En complément des joints d'étanchéité peuvent être disposés entre le tronçon de veine annulaire 34, et d'un côté le carter avant 2, et de l'autre côté la face intérieure 6 du capot arrière 4, pour assurer dans la position fermée de l'inverseur de poussée une étanchéité du flux évitant des passages d'air radialement vers l'extérieur de la veine annulaire.

En complément on peut ajouter un matériau d'atténuation acoustique sur le tronçon de veine annulaire 34, de manière à contribuer à absorber des vibrations acoustiques dans la veine annulaire, et à réduire les émissions sonores.

Une première liaison glissière est formée par exemple par une seule glissière droite 44 présentant une forme plate allongée, disposée préférentiellement dans un plan axial au milieu de chaque volet, entre le volet et le carter avant 2 ; cette glissière droite comporte une extrémité avant fixée à l'avant du support de glissières 30, et une rainure intérieure droite sensiblement parallèle à l'axe principal de la nacelle. L'extrémité avant de la partie extérieure 20 de la tige télescopique 18 comporte un doigt transversal 46 engagé dans cette rainure droite.

Une seconde liaison glissière est formée par exemple par une glissière courbe 36 présentant une forme plate allongée, disposée préférentiellement parallèlement à la glissière droite 44, comportant aussi son extrémité avant fixée à l'avant du support de glissières 30.

La glissière courbe 36 comporte une rainure intérieure sensiblement parallèle à l'axe principal de la nacelle, présentant une légère courbure tournée vers cet axe principal. Un axe transversal 40 relié au carter avant fixe 2, disposé légèrement en arrière et au-dessus de l'extrémité arrière de ce carter avant, est ajusté dans cette position fermée à l'arrière de la rainure courbe de la glissière courbe 36.

Dans la position fermée la surface radialement extérieure de la veine annulaire présente une bonne continuité aérodynamique avec le tronçon de veine annulaire 34 assurant la continuité entre le carter avant 2 et la face intérieure 6 du capot arrière 4. Aucun mécanisme ne perturbe l'écoulement du fluide dans cette veine.

L'inverseur de poussée est concentré entièrement à l'extérieur du carter avant 2, en formant un ensemble plat ajusté entre ce carter et les grilles 10 disposées à l'extérieur. Il ne dépasse quasiment pas en arrière du carter avant 2, ce qui permet au capot arrière 4 d'être très avancé.

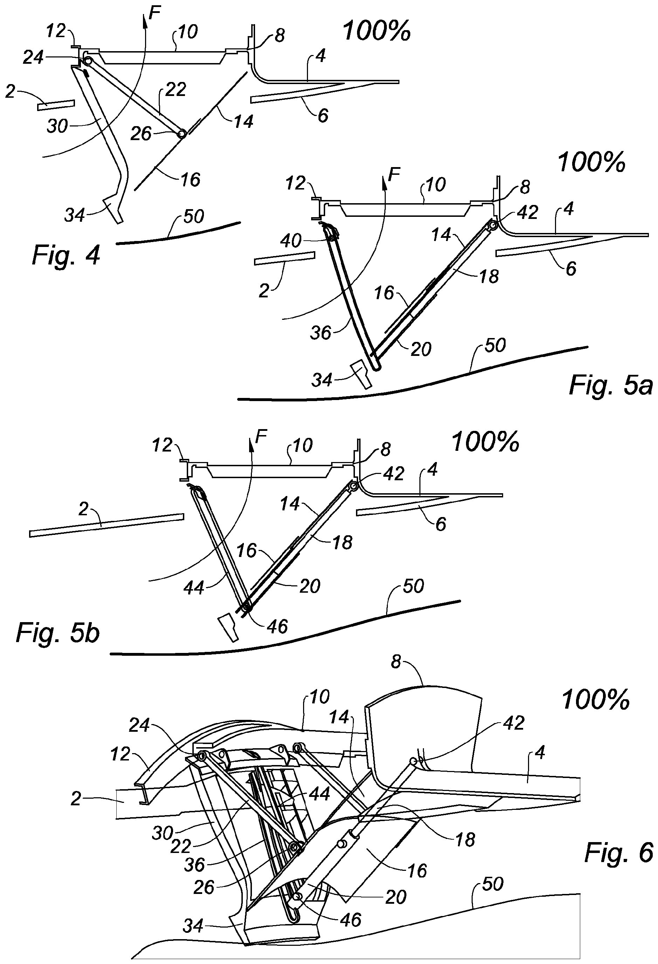

Les figures 4, 5a, 5b et 6 présentent l'inverseur de poussée ouvert, le capot arrière 4 ayant entièrement reculé sous l'effet d'une motorisation en entraînant les grilles 10 et les demi-volets 14, 16.

Le recul de la glissière courbe 36 fixée au cadre avant 12, entraîne un coulissement de l'axe transversal 40 dans sa rainure. L'axe de pivotement avant de la glissière courbe 36 positionné au-dessus de l'axe transversal 40, implique un basculement vers le bas de cette glissière courbe, qui provoque de la même manière le basculement vers le bas du support de glissières 30.

La glissière droite 44 présentant le même mouvement de basculement vers le bas, entraîne le doigt transversal avant 46 de la tige télescopique 18, qui se déploie en donnant le même mouvement aux demi-volets avant 16 et arrière 14, fixés respectivement à la partie extérieure 20 et à la partie intérieure 18 de cette tige.

On obtient un déploiement des volets avec le tronçon annulaire 34 venant à proximité de la surface radialement intérieure 50 de la veine annulaire, ces volets fermant en grande partie la veine annulaire. Le flux est dévié par les volets radialement vers l'extérieur, pour passer au travers des grilles 10 qui dirigent ce flux vers l'avant en générant la poussée de freinage.

Les bielles 22 disposées de chaque côté des volets réalisent par leur pivot arrière 26 un guidage des demi-volets avant 16.

Deux bielles 22 sont préférées, mais le système pourrait aussi fonctionner avec une seule bielle.

En variante le support de glissières 30 peut présenter différentes formes. Il peut en particulier comporter des ailettes réalisant une première direction du flux radialement vers l'extérieur.

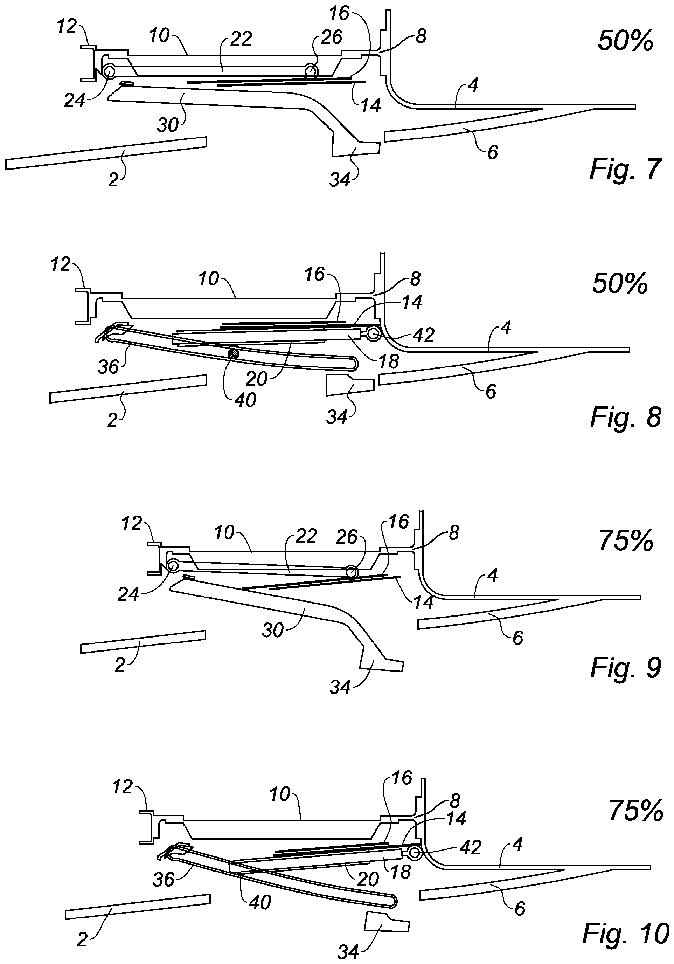

Les figures 7 et 8 présentent un recul du capot arrière mobile 4 égal à 50% de la course totale. L'axe transversal 40 est assez éloigné du pivot avant du support de glissières 30, ce support a très peu basculé.

Le tronçon de veine annulaire 34 a reculé avec le capot arrière 4, mais reste proche de la face intérieure 6 de ce capot. La glissière courbe 36 ainsi que la glissière droite 44 ont comme le support de glissières 30, très peu basculées, les demi-volets 14, 16 restent proches des grilles 10.

Les figures 9 et 10 présentent un recul du capot arrière mobile 4 plus important, égale à 75% de la course totale. Sous l'effet de l'axe transversal 40 qui se rapproche du pivot avant du support de glissières 30, ce support a basculé un peu plus tout en suivant le recul du capot arrière.

La glissière courbe 36 et la glissière droite 44 basculent de la même manière, mais la forme droite de cette glissière droite entraîne un faible abaissement du doigt transversal 46 lié à la tige télescopique 18. Les demi-volets 14, 16 ont peu basculé.

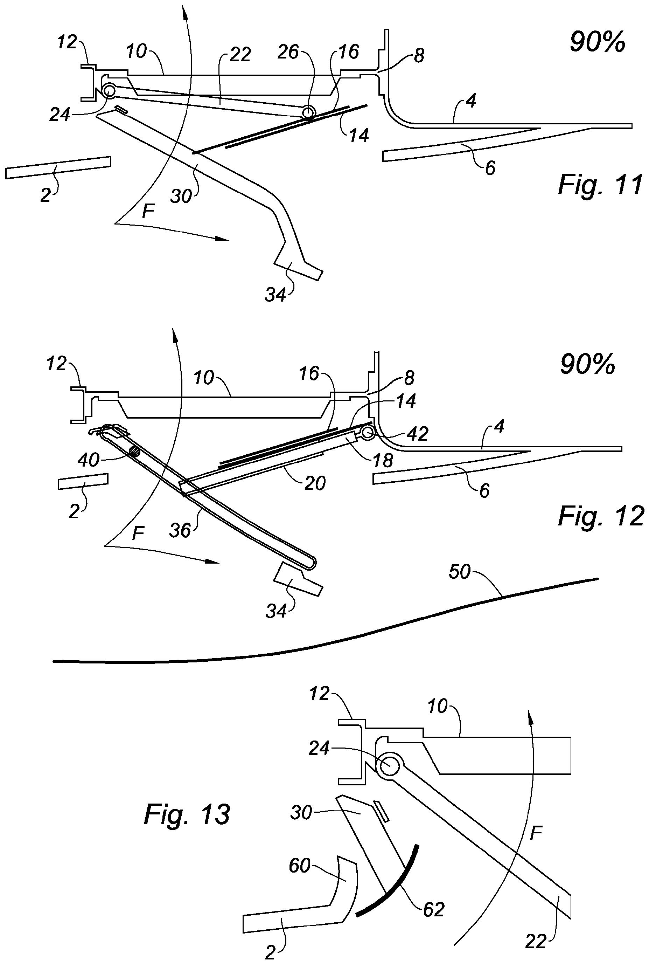

Les figures 11 et 12 présentent un recul du capot arrière mobile 4 plus important, égale à 90% de la course totale. Sous l'effet de l'axe transversal 40 qui arrive près du pivot avant du support de glissières 30, ce support a basculé fortement.

La glissière courbe 36 et la glissière droite 44 basculent de la même manière. La forme droite de la glissière droite 44 entraîne un abaissement plus important du doigt transversal 46 lié à la tige télescopique 18. Les demi-volets 14, 16 basculent fortement.

Grâce à la forme particulière de la glissière courbe 36 et de la glissière droite 44, on obtient un mouvement de basculement important des volets uniquement en fin de recul du capot arrière 4. On peut en particulier ajuster facilement la cinématique de ces volets en modifiant ces formes courbe et droite.

La figure 13 présente l'extrémité arrière du carter avant 2 comportant un bord arrière fixe de déviation 60 tourné radialement vers l'extérieur, qui aide au guidage du flux radialement vers l'extérieur en position ouverte de l'inverseur de poussée.

Le support de glissières 30 comporte aussi dans son passage intérieur du flux, un bord mobile de déviation 62 présentant une forme courbée vers l'axe de la nacelle, qui aide aussi au guidage de ce flux radialement vers l'extérieur en position ouverte.

En complément, ce support de glissières 30 peut comporte des aubes ou ailettes permettant de diriger de manière appropriée le flux F de la veine annulaire vers les grilles 10.

Bien entendu, la présente invention n'est nullement limitée au mode de réalisation décrit et représenté.

C'est ainsi par exemple que la glissière droite 44 pourrait être remplacée par une crémaillère coopérant avec le doigt transversal avant 46 de la tige télescopique 18.

## Revendications

1. Nacelle de turboréacteur comprenant un inverseur de poussée, l'inverseur de poussée comportant des grilles d'inversion de poussée (10) disposées autour d'une veine annulaire comprenant radialement à l'extérieur un carter avant fixe (2), comportant au moins un capot mobile (4) reculant vers l'arrière dans une position ouverte d'inversion de poussée, et comportant des volets basculants (14, 16) reliés par au moins un pivot arrière (42) au capot mobile (4), qui basculent en fermant au moins en partie la veine annulaire dans la position ouverte, où les grilles (10) reculent avec le capot mobile (4),
dans la position fermée les volets basculants (14, 16) et les grilles (10) sont disposés à l'extérieur du carter fixe (2), et
chaque volet basculant (14, 16) est relié au carter fixe (2) par des glissières (36, 44) qui le font basculer lors du recul du capot mobile (4) et **caractérisé**
**en ce qu'**il comporte un support de glissières (30) lié du côté avant par un pivot (32) aux grilles (10), supportant les glissières (36, 44) qui sont fixées dessus, commandant l'ouverture d'un volet (14, 16).

2. Nacelle de turboréacteur selon la revendication 1, **caractérisée en ce que** dans la position fermée, les volets basculants (14, 16) et les grilles (10) sont disposés successivement dans cet ordre à l'extérieur du carter fixe (2).

3. Nacelle de turboréacteur selon la revendication 1, **caractérisée en ce qu'**il comporte une première glissière (36) recevant dans une rainure un axe transversal (40) lié au carter avant (2), qui commande un basculement du support de glissières (30).

4. Nacelle de turboréacteur selon la revendication 3, **caractérisée en ce qu'**il comporte une deuxième glissière (44) recevant dans une rainure un doigt transversal (46) lié aux volets (14, 16), qui commande un basculement de ce volet (14, 16).

5. Nacelle de turboréacteur selon l'une quelconque des revendications 1 à 4, **caractérisée en ce que** le support de glissière (30) comporte du côté arrière un tronçon de veine annulaire (34), qui est dans la position fermée axialement interposé entre le carter avant (2) et une surface intérieure de la veine annulaire (6) du capot mobile (4).

6. Nacelle de turboréacteur selon l'une quelconque des revendications 1 à 5, **caractérisée en ce que** le support de glissières (30) comporte dans la position ouverte un passage intérieur du flux (F) présentant des bords de déviation de ce flux (62).

7. Nacelle de turboréacteur selon l'une quelconque des revendications 1 à 6, **caractérisée en ce que** ledit support de glissières (30) comporte des aubes permettant de diriger le flux d'air de ladite veine annulaire vers lesdites grilles.

8. Nacelle de turboréacteur selon l'une quelconque des revendications précédentes, **caractérisée en ce que** chaque volet (14, 16) comporte deux demi-volets coulissant l'un par rapport à l'autre.

9. Nacelle de turboréacteur selon la revendication 8, **caractérisé en ce qu'**il comporte au moins une tige télescopique (18) comprenant une partie intérieure et une partie extérieure (20) fixées chacune à un demi-volet pour le guider.

10. Nacelle de turboréacteur selon l'une quelconque des revendications précédentes, **caractérisée en ce qu'**il comporte au moins une bielle (22) comprenant une extrémité pivotante (24) fixée aux grilles (10) et l'autre extrémité pivotante (26) fixée au volet (14, 16), pour guider ce volet.

## Patentansprüche

1. Gondel für ein Turbostrahltriebwerk, eine Schubumkehr umfassend, wobei die Schubumkehr Schubumkehrgitter (10) umfasst, die um einen ringförmigen Strom herum angeordnet sind, der radial außerhalb ein festes vorderes Gehäuse (2) umfasst, das mindestens eine bewegliche Abdeckung (4) beinhaltet, die nach rückwärts in eine offene Schubumkehrposition zurückweicht, und Schwenkklappen (14, 16) beinhaltet, die durch mindestens ein rückwärtiges Drehgelenk (42) mit der beweglichen Abdeckung (4) verbunden sind, die in die offene Position schwenken und dabei mindestens teilweise den ringförmigen Strom schließen, wobei die Gitter (10) mit der beweglichen Abdeckung (4) zurückweichen, die Schwenkklappen (14, 16) und die Gitter (10) in der geschlossenen Position außerhalb des festen Gehäuses (2) angeordnet sind, und jede Schwenkklappe (14, 16) durch Gleitschienen (36, 44) mit dem festen Gehäuse (2) verbunden ist, die es beim Zurückweichen der beweglichen Abdeckung (4) schwenken lassen, und
**dadurch gekennzeichnet, dass** sie eine Gleitschienenhalterung (30) beinhaltet, die an der Vorderseite durch ein Drehgelenk (32) mit den Gittern (10) verbunden ist, die die Gleitschienen (36, 44), die darauf befestigt sind, hält, wodurch die Öffnung einer Klappe (14, 16) angesteuert wird.

2. Gondel für ein Turbostrahltriebwerk nach Anspruch 1, **dadurch gekennzeichnet, dass** die Schwenkklappen (14, 16) und die Gitter (10) in der geschlossenen Position nacheinander in dieser Reihenfolge außerhalb des festen Gehäuses (2) angeordnet sind.

3. Gondel für ein Turbostrahltriebwerk nach Anspruch 1, **dadurch gekennzeichnet, dass** sie eine erste Gleitschiene (36) beinhaltet, die in einer Nut eine querlaufende Achse (40) aufnimmt, die mit dem vorderen Gehäuse (2) verbunden ist, die einen Schwenk der Gleitschienenhalterung (30) ansteuert.

4. Gondel für ein Turbostrahltriebwerk nach Anspruch 3, **dadurch gekennzeichnet, dass** sie eine zweite Gleitschiene (44) beinhaltet, die in einer Nut einen querlaufenden Stift (46) aufnimmt, der mit den Klappen (14, 16) verbunden ist, der einen Schwenk dieser Klappe (14, 16) ansteuert.

5. Gondel für ein Turbostrahltriebwerk nach einem der Ansprüche 1 bis 4, **dadurch gekennzeichnet, dass** die Gleitschienenhalterung (30) auf der rückwärtigen Seite einen ringförmigen Stromabschnitt (34) beinhaltet, der in der geschlossenen Position axial zwischen dem vorderen Gehäuse (2) und einer Innenoberfläche des ringförmigen Stroms (6) der beweglichen Abdeckung (4) eingesetzt ist.

6. Gondel für ein Turbostrahltriebwerk nach einem der Ansprüche 1 bis 5, **dadurch gekennzeichnet, dass** die Gleitschienenhalterung (30) in der offenen Position einen Innendurchlass der Strömung (F) beinhaltet, der Umleitungsränder dieser Strömung (62) aufweist.

7. Gondel für ein Turbostrahltriebwerk nach einem der Ansprüche 1 bis 6, **dadurch gekennzeichnet, dass** die Gleitschienenhalterung (30) Schaufelblätter beinhaltet, die es ermöglichen, die Luftströmung des ringförmigen Stroms zu den Gittern zu leiten.

8. Gondel für ein Turbostrahltriebwerk nach einem der vorstehenden Ansprüche, **dadurch gekennzeichnet, dass** jede Klappe (14, 16) zwei Halbklappen beinhaltet, die in Bezug zueinander gleiten.

9. Gondel für ein Turbostrahltriebwerk nach Anspruch 8, **dadurch gekennzeichnet, dass** sie mindestens einen Teleskopstab (18) beinhaltet, der einen inneren Teil und einen äußeren Teil (20) umfasst, die jeweils an einer Halbklappe befestigt sind, um sie zu leiten.

10. Gondel für ein Turbostrahltriebwerk nach einem der vorstehenden Ansprüche, **dadurch gekennzeichnet, dass** sie mindestens ein Steuergestänge (22) beinhaltet, das ein drehendes Ende (24) umfasst, das an den Gittern (10) befestigt ist, und das andere drehende Ende (26) an der Klappe (14, 16) befestigt ist, um diese Klappe zu leiten.

## Claims

1. A turbojet engine nacelle comprising a thrust reverser, the thrust reverser including thrust reversal cascades (10) disposed around an annular flow path comprising, radially on the outside, a fixed front casing (2), including at least one movable cowl (4) moving backwards in an open thrust reversal position, and including tilting flaps (14, 16) connected by at least one rear pivot (42) to the movable cowl (4), which tilt by at least partially closing the annular flow path in the open position, where the cascades (10) move backwards with the movable cowl (4), in the closed position the tilting flaps (14, 16) and the cascades (10) are disposed outside the fixed casing (2), and each tilting flap (14, 16) is connected to the fixed casing (2) by slides (36, 44) which make it tilt when the movable cowl (4) is moved backwards and **characterized in that** it includes a slide support (30) linked from the front side by a pivot (32) to the cascades (10), supporting the slides (36, 44) which are fixed thereon, controlling the opening of a flap (14, 16).

2. The turbojet engine nacelle according to claim 1, **characterized in that** in the closed position, the tilting flaps (14, 16) and the cascades (10) are disposed successively in this order outside the fixed casing (2).

3. The turbojet engine nacelle according to claim 1, **characterized in that** it includes a first slide (36) receiving in a groove a transverse axis (40) connected to the front casing (2), which controls a tilting of the slide support (30).

4. The turbojet engine nacelle according to claim 3, **characterized in that** it includes a second slide (44) receiving in a groove a transverse finger (46) connected to the flaps (14, 16), which controls a tilting of this flap (14, 16).

5. The turbojet engine nacelle according to any one of claims 1 to 4, **characterized in that** the slide support (30) includes on the rear side an annular flow path section (34), which is in the closed position axially interposed between the front casing (2) and an inner surface of the annular flow path (6) of the movable cowl (4).

6. The turbojet engine nacelle according to any one of claims 1 to 5, **characterized in that** the slide support (30) includes, in the open position, an internal passage for the flow (F) having edges of deflection of this flow (62).

7. The turbojet engine nacelle according to any one of claims 1 to 6, **characterized in that** said slide support (30) includes blades making it possible to direct the flow of air from said annular flow path towards said cascades.

8. The turbojet engine nacelle according to any one of the preceding claims, **characterized in that** each flap (14, 16) includes two half-flaps sliding relative to one another.

9. The turbojet engine nacelle according to claim 8, **characterized in that** it includes at least one telescopic rod (18) comprising an inner part and an outer part (20) each fixed to a half-flap to guide it.

10. The turbojet engine nacelle according to any one of the preceding claims, **characterized in that** it includes at least one connecting rod (22) comprising a pivoting end (24) fixed to the cascades (10) and the other pivoting end (26) fixed to the flap (14, 16), to guide this flap.
